# EUROPEAN PATENT APPLICATION

(11) **EP 1 746 768 A2**
(43) Date of publication of application: **24.01.2007**
(21) Application number: 06116042.0
(22) Date of filing: 26.06.2006
(51) Int. Cl.: H04L 12/26

(54) **Method and apparatus for data network sampling**

(30) Priority: 22.07.2005 US 702100 P; 25.10.2005 US 258444
(71) Applicant: AT&T Corp., New York, NY 10013-2412 (US)
(72) Inventor: Krishnamurthy, Balachander, New York, NY 10003 (US)
(74) Representative: Harding, Richard Patrick

(57) **Abstract**

Disclosed is an informed sampling technique for biasing a sample data set toward network data of interest for a particular application. Network data received at a network node (for example at a rate which is greater than a sampling rate for which the network node is configured) is chosen to be included in a sample set based on one or more predetermined signatures which are chosen to bias the sample set toward network data of interest for a particular application. For example, the sample set may be biased to include data of interest for fraud detection, spam detection, and intrusion detection. The particular signature(s) may be predefined by a user, or may be automatically generated by another network application. The invention may be implemented at various levels and nodes of a network. For example, the informed sampling may be implemented at a traffic monitoring function of a network router, a flow collector which receives network flow data from the router, or both.

## Description

### BACKGROUND OF THE INVENTION

Data networks, such as the Internet, transport large amounts of data, often in the form of data packets. As is well known, data packets are transmitted through a network via routers. Routers are network nodes that receive data packets on a network interface, inspect the destination address of the data packets, determine next hop routing, and output data packets on an appropriate interface for further routing through the network. The router also buffers received data packets from the time the packet is received until the time the packet is output from the router. A data packet may traverse multiple routers during its traversal of the network from a source node to a destination node.

In some cases, it is desirable for a router to monitor the data traffic passing through it in order to collect information about the data packets being handled by the router. Such traffic monitoring may be desirable, for example, for accounting functions performed on behalf of large network operators. Consider two network operators, each of which passes data packets to the other operator's network. If the volume of data packets passed between the operators is large, the operators may enter into a peering agreement in which the operators agree on a payment plan based on each operator's use of the other operator's network. For example, if operator A passes 100 megabytes to operator B's network, and operator B passes 300 megabytes to operator A's network, then operator B may pay operator A for the differential usage of 200 megabytes of data traffic.

In order to accommodate the need for accounting functions, many routers have traffic monitoring / metering functionality to enable the router to output information regarding the data traffic passing through the router. One well known system is Cisco Systems' NetFlow system. NetFlow is a traffic summarization software system that runs on a network router. NetFlow inspects data packets that are being handled by the router and generates data describing the various network flows handled by the router. However, with the dramatic increase in worldwide network traffic, even the fastest routers have difficulty just keeping up with their primary function of routing network data. The addition of traffic monitoring to a router's functionality imposes an overhead cost, over and above the cost of the router's main routing function.

In order to alleviate the overhead problem, network router traffic monitoring may be configurable so that only some of the network data packets are inspected. This sampling technique may be implemented such that only one data packet is inspected out of a number (n) of data packets handled by the router. This 1/n sampling technique allows the router to perform traffic monitoring while still maintaining an acceptable level of routing performance. Such sampling generally provides acceptable results for administrative tasks, such as for peering relationship billing as described above, where the results of the monitoring may be multiplied by n to generate an acceptable approximation of the desired information. For example, suppose that 1/500 sampling is performed such that 1 out of every 500 data packets is inspected by the router, and that the traffic monitoring output reports that, over the course of a day, network operator A passed 100 megabytes to operator B's network, and operator B passed 400 megabytes to operator A's network. Since 1/500 sampling was used, the numbers output by the traffic monitoring system can be multiplied by 500 to estimate that operator A passed 50,000 (100 * 500) megabytes to operator B's network, and operator B passed 200,000 (400*500) megabytes to operator A's network.

Since the router's primary function is to route data packets, the router generally only holds on to the network traffic monitoring data it generates for a short period of time. For example, in the NetFlow system, the flow data generated during traffic monitoring is continuously output to a flow collector, which retrieves and stores the flow data generated by NetFlow. The flow data stored in the flow collector may then be used for various purposes. Another problem exists with respect to retrieval of the flow data from the router by the flow collector. Even though the flow data represents aggregate data of the network traffic (which may or may not be based on 1/n sampling), the flow data still represents a large volume of data that must be passed to the flow collector from the router. If the bandwidth of the connection between the router and the flow collector is insufficient to transfer all the flow data, some of the flow data may be lost. Even if the bandwidth is sufficient to support the data transfer, the storage system of the flow collector may be incapable of keeping up with the transferred data and again, some of the flow data may be lost. For this reason, another level of sampling may be implemented at the router to flow collector interface, such that only 1/n of the flow data records transferred from the router to the flow collector are stored in the flow collector. Again, for reasons similar to those described above, sampling generally provides sufficient results for most network administrative tasks.

In order to further improve the results when sampling is necessary, a technique referred to as smart sampling has been developed, whereby while only 1/n of data packets are sampled by the router, the sampled data packets are chosen such that proportions of types of data packets in the sample data set match the proportion of those types of packets in the original unsampled data packets. Smart sampling is described in further detail in N.G. Duffield, C. Lund, M. Thorup, Charging From Sampled Network Usage, ACM SIGCOMM Internet Measurement Workshop 2001, San Francisco, CA, November 1-2, 2001 and N.G. Duffield, C. Lund, M. Thorup, Learn More, Sample Less: Control of Volume and Variance in Network Measurement, IEEE Transactions in Information Theory, vol. 51, no. 5, pp. 1756-1775, 2005.

While sampling provides acceptable results for many administrative purposes, network traffic monitoring has many other advantageous uses, such as fraud detection, spam (i.e., unsolicited bulk commercial email) detection and intrusion detection. Detecting these network exploits at the network level has many advantages, and traffic monitoring to detect these exploits at the network level has been proposed. However, the use of 1/n sampling, while heretofore required for acceptable router performance, generally renders the resulting flow data unusable for these additional purposes. Since this type of network traffic monitoring must make inferences based on the network traffic, it is likely that certain packets required for such inferences will be lost during the 1/n sampling, resulting in an unacceptable data set upon which to perform the required inferencing. In recognition of this fact, there exist stand-alone network monitoring devices which attach to the network and perform the sole function of monitoring all data packets that are present on the network. These dedicated network devices, sometimes called network sniffers, have the processing capability to inspect all packets. However, the problem with network sniffers is that they are an additional network element, and as such they are expensive to implement within a network.

What is needed is a technique for adapting current network monitoring techniques so that they provide output that may be used for a variety of applications, such as fraud, spam and intrusion detection.

### BRIEF SUMMARY OF THE INVENTION

The present invention provides an informed sampling technique for biasing a sample data set toward network data of interest for a particular application.

In accordance with an embodiment of the invention, network data is received at a first network node, for example at a rate which is greater than a sampling rate for which the network node is configured. Rather than sampling data at a pure 1/n rate as known in the art, the network node chooses data to be included in a sample set based on one or more predetermined signatures. The predetermined signatures may be chosen to bias the sample set toward network data of interest for a particular application. For example, the sample set may be biased to include data of interest for fraud detection, spam detection, and intrusion detection. The particular signature(s) may be predefined by a user, or may be automatically generated by another network application.

The invention may be implemented at a traffic monitoring function of a network router, whereby the router's main function is to receive and route data packets in a network. The traffic monitoring function may inspect the data packets being handled by the router and include the data packets in a sample set only if the data packets match one or more stored signatures. The stored signatures may be chosen such that the sample set will be biased to contain data packets of interest for a particular application.

In one embodiment, the data packets in the sample set may be aggregated and the router may generate network flow data based on the sample set. This network flow data may be a summary of the data packets communicated within particular network flows being handled by the router. This network flow data may be received by another network node (e.g., a network flow collector), and the informed sampling technique of the present invention may be applied at the network flow collector as well. Such an embodiment is advantageous, for example, when network flow data is generated by the router at a rate greater than the network flow collector can handle. Again, rather than sampling the network flow data at a pure 1/n rate as known in the art, the flow collector chooses flow data to be included in a sample set based on one or more predetermined signatures which are chosen such that the sample set is biased toward flow data of interest for a particular application.

These and other advantages of the invention will be apparent to those of ordinary skill in the art by reference to the following detailed description and the accompanying drawings.

### BRIEF DESCRIPTION OF THE DRAWINGS

Fig. 1 is a block diagram of a prior art router and flow collector;

Fig. 2 illustrates the format of an Internet Protocol (IP) data packet;

Fig. 3 illustrates the format of a flow data record;

Fig. 4 is a high level functional block diagram of a network node in accordance with an embodiment of the invention;

Fig. 5 is a flowchart showing the processing steps performed by the network node of Fig. 4 in accordance with an embodiment of the invention;

Fig. 6 shows an embodiment in which informed sampling is implemented at both a packet level at a router and a network flow record level at a flow collector;

Fig. 7 illustrates an example signature for use at a router; and

Fig. 8 illustrates an example signature for use at a flow collector.

### DETAILED DESCRIPTION

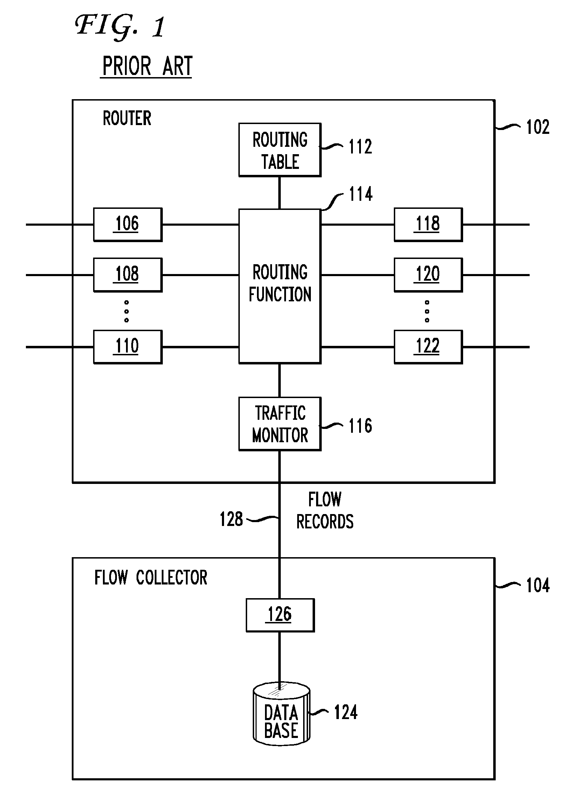

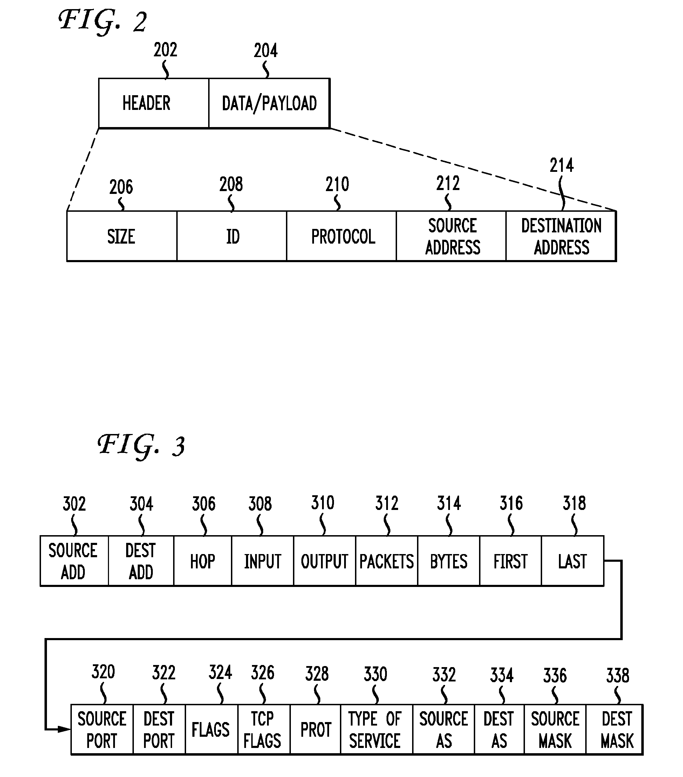

FIG. 1 shows a prior art router 102 and flow collector 104. Router 102 is shown having a plurality of network interfaces 106, 108, 110 for receiving data packets. As is well known in the art, the main function of a router is to receive data packets at input interfaces 106, 108, 110 and to determine the appropriate output interface 118, 120, 122 from which the data packet is to be further transmitted. The appropriate output interface depends upon the ultimate destination of the data packet, as identified in the data packet itself. One well known type of network is an Internet Protocol (IP) network, in which the data packets generally conform to the format shown in Fig. 2. It is noted here that the format of an IP data packet is well known in the art, and will be described herein only to the extent necessary for an understanding of the present invention. In an actual embodiment, an IP data packet may contain additional fields which are not shown in Fig. 2. Fig. 2 shows a data packet comprising a header portion 202 and data/payload portion 204. The header 202 describes various characteristics of the data packet, and the data/payload 204 contains the actual data that is to be transported. The header 202 contains various fields, some of which are shown in Fig. 2. The size field 206 gives the size (in bytes) of the data packet (both header and data/payload). The ID field 208 is an identification number which is used to uniquely identify the data packet. The protocol field 210 indicates the type of the data packet (e.g., TCP, UDP, etc.). The source address field 212 contains the IP address of the original sender of the packet. The destination address field 214 contains the IP address of the final destination of the packet.

Returning now to Fig. 1, upon receipt of a data packet by router 102 at an interface 106, 108, 110, the router performs routing functions, which are represented by block 114. The router will examine the data packet header and use the destination address 214 to look up the appropriate output interface (e.g., 118, 120, 122) in the routing table 112. The data packet will then be output to the appropriate output interface for further routing. The router buffers the received data packets while it determines the proper routing for the data packet. The routing function block 114 would therefore include this buffering function. In addition to the routing function, a router may also provide traffic monitoring functions as well, as represented by traffic monitor 116 in Fig. 1. As described above in the background section, there are several uses for traffic monitoring, such as accounting functions. The traffic monitor may therefore further process the received data packets.

One well known implementation of a traffic monitor 116 is Cisco Systems' NetFlow software. NetFlow inspects the header portion of data packets that are being handled by the router 102, and generates data, at a flow level, describing the various network flows handled by the router. A flow of traffic is a set of packets with a common property, known as the flow key, observed within a period of time. NetFlow aggregates information for each of the flows being handled by the router, and generates flow data records, each of which summarizes a network flow. A flow data record can be thought of as summarizing a set of packets arising in the network through some higher level transaction, e.g., a remote terminal session, or a web-page download. NetFlow performs its function of aggregating flow information by inspecting only the header 202 of a data packet. NetFlow does not inspect the data/payload 204.

An example of a flow data record generated by a traffic monitor 116 is shown in Fig. 3. It is noted here that the format of a flow record may vary depending upon the particular implementation of the traffic monitor 116, and Fig. 3 shows some of the fields that may be present in a flow data record. The source address field 302 contains the IP address of the device that sent the flow. The destination address field 304 contains the IP address of the destination device. The hop field 306 contains the next hop router's IP address. The input field 308 contains the input interface index. The output field 310 contains the output interface index. The packets field 312 contains the number of packets in the flow. The bytes field 314 contains the total number of bytes in the flow. The "first" field 316 contains the system time at the start of the flow. The "last" field 318 contains the system time at the end of the flow. The source port field 320 contains the port number of the source device on which the packets were transmitted. The destination port field 322 contains the port number of the destination device on which the packets were received. The flags field 324 contains a reason code for various events (e.g., a packet was discarded). The TCP flags field 326 contains a cumulative OR of TCP flags. The protocol field 328 contains the protocol (e.g., TCP, UDP, ICMP). The type of service field 330 contains the IP type of service. The source AS field 332 contains the originating autonomous system of the source address. The destination AS field 334 contains the originating autonomous system of the destination address. The source mask field 336 contains the source address prefix mask bits. The destination mask field 338 contains the destination address prefix mask bits. Other fields, not shown in Fig. 3, are often present in flow records. A flow record, such as shown in Fig. 3, is created by the traffic monitor 116 when a flow is complete, a connection is closed, or when the traffic monitor no longer has capacity to process the flow (e.g., memory full). The generation of flow records, for example in accordance with the NetFlow system, is well known in the art and has been described herein at a high level only as necessary for an understanding of the present invention.

The flow records generated by traffic monitor 116 are retrieved by flow collector 104, which is generally a separate network node. The flow records are received by flow collector 104 via network interface 126, and are generally stored in a database 124. Depending upon the particular implementation, the flow records may be further processed by the flow collector 104 (or other system) in order to provide desired information about the network traffic.

As described above in the background section, even the fastest routers have difficulty just keeping up with their primary function of routing network data. The addition of traffic monitoring to a router's functionality imposes an overhead cost, over and above the cost of the router's main routing function. Often, this overhead cost is unacceptable and must be reduced. One solution to this problem has been to configure the traffic monitor 116 to generate its flow records based upon only a sampling of the data packets handled by the router 102. For example, the traffic monitor may be configured to sample only 1/n data packets handled by the router and to generate the flow records based on this 1/n sampling. As discussed above, this 1/n sampling at the router level is generally acceptable for many administrative and accounting network functions.

Also as described above, another problem exists with respect to retrieval of the flow records from the router 102 by the flow collector 104. Even though the flow records represent aggregate data of the network traffic (which may or may not be based on 1/n sampling), the flow records still represent a large volume of data that must be passed to the flow collector 104 from the router 102. If the bandwidth of the connection between the router 102 and the flow collector 104 (e.g., line 128 and interface 126) is insufficient to transfer all the flow records at the rate they are being generated, some of the flow records may be lost. Even if the bandwidth is sufficient to support the data transfer, the storage system (e.g., DB 124) of the flow collector 104 may be incapable of keeping up with the transferred data and again, some of the flow records may be lost. For this reason, another level of sampling may be implemented at the flow collector 104, such that only 1/n of the flow records generated by the router 102 are actually retrieved and stored by the flow collector 104. Again, for reasons similar to those described above, this 1/n sampling at the flow collector level is generally acceptable for many administrative and accounting network functions.

While 1/n sampling is generally acceptable for administrative and accounting purposes, it is generally unacceptable for other purposes to which the flow records may otherwise be put to use as described above in the background section. The present invention provides a technique, referred to as informed sampling, which allows for sampling at either the router level, the flow collector level, or both, while also preserving the usefulness of the flow records for various additional uses. Rather than using a random 1/n sampling technique, informed sampling in accordance with the present invention biases the sample set to include more of the information of interest for a particular application. For example, suppose there is a desire to use network flow information to detect a particular type of network attack. If it is known that the network attack generally exploits port 100 on the destination computer, then it would be useful to bias the sample set to include network data for packets having a destination port 100. informed sampling allows a user (or application) to specify the type of data of interest and to bias the sample set accordingly. In one embodiment, the specification of data of interest is performed using signatures which are compared to the data to determine whether particular data will be included in the sample set.

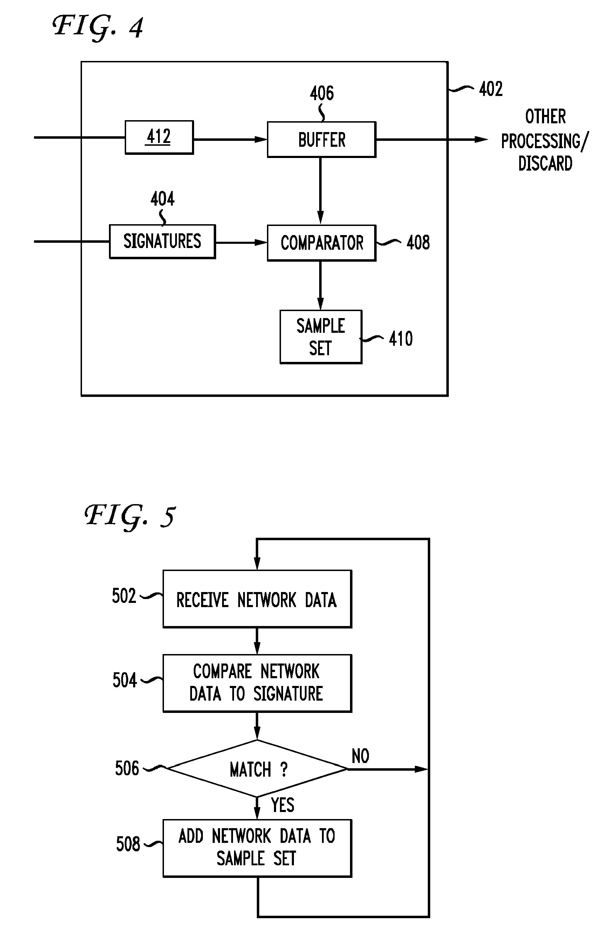

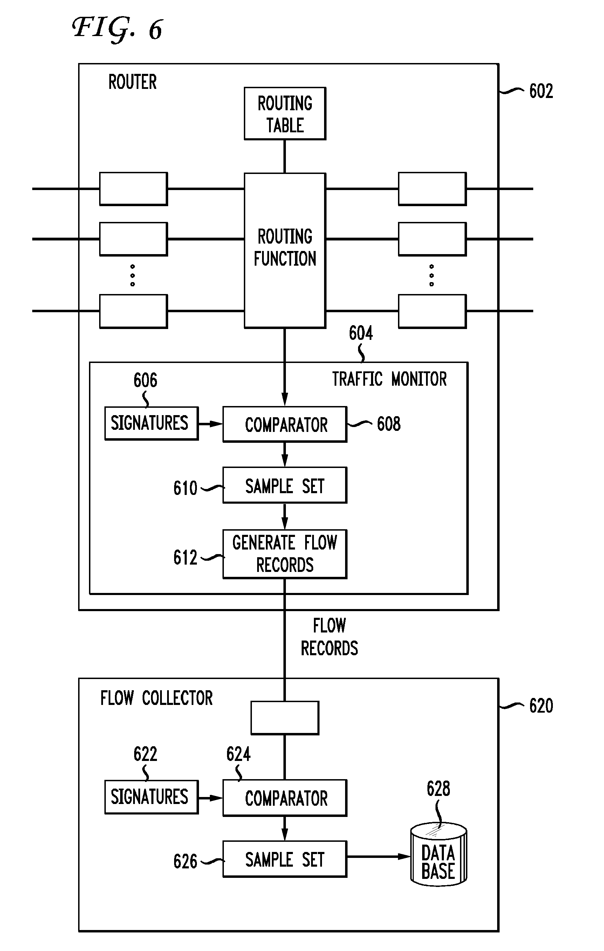

A high level functional block diagram of a network node (or a portion of a network node) in accordance with an embodiment of the invention is shown in Fig. 4. The diagram of Fig. 4 will be described in conjunction with the flowchart of Fig. 5 in order to describe the processing performed by the network node 402. The network node 402 includes a network interface 412 for receiving network data in step 502. Buffer 406 for stores the network data during processing. Also included in network node 402 is stored signatures 404, which may include one or more signatures used to bias the sample set. The received network data is compared to the stored signature(s) 404 by comparator 408 in step 504. If there is a match (as determined in step 506), then the network data is added to the sample set 410 in step 508. It is noted that in one embodiment, the network node 402 could be implemented on a well known computer system, with the steps of Fig. 5 being performed by a processor executing stored computer program code. In such an embodiment, one or memory devices would store the signatures 404, would implement the buffer 406, and would also store the computer program instructions and the sample set 410. The functions of the comparator would be performed by the processor.

It is noted that the present invention may be implemented at various nodes within a network. For example, the informed sampling technique of the present invention may be implemented at a packet level at a router, or at a network flow record level at a flow collector. Alternatively, the informed sampling technique may be performed at multiple levels at the same time. For example, the informed sampling technique of the present invention may be implemented at a packet level at a router and at the same time implemented at a network flow record level at a flow collector.

An embodiment in which the informed sampling technique of the present invention is implemented at both a packet level at a router and a network flow record level at a flow collector is shown in Fig. 6. Fig. 6 shows router 602 which functions generally as described above in connection with Fig. 1. The traffic monitor 604 of router 602 is configured to utilize informed sampling in accordance with the present invention. As such, rather than sampling a random 1/n data packets, the traffic monitor 604 compares the data packets received by router 602 with one or more stored signatures 606 using comparator 608. If the data packet matches the signature, then the data packet is included in the sample set 610. Otherwise, the data packet is not added to the sample set 610, and the traffic monitor goes on to inspect the next data packet. The traffic monitor uses the data packets in the sample set to generate flow records as represented by block 612. The flow records may be generated in a manner well known in the art, for example using the NetFlow software described above.

The flow records generated by the traffic monitor 604 are retrieved by the flow collector 620, which operates generally as described above in connection with the flow collector 104 of Fig. 1. The flow collector 620 is configured to utilize informed sampling in accordance with the present invention. As such, rather than sampling a random 1/n flow records, the flow collector 620 compares the received flow records with one or more stored signatures 622 using comparator 624. If the flow record matches the signature, then the flow record is included in the sample set 626. Otherwise, the flow record is not added to the sample set 626, and the flow collector goes on to inspect the next received flow record. The flow records in the sample set 626 are then stored in the database 628. The flow records stored in database 628 may then be processed in accordance with any one of various applications being implemented by the system.

One skilled in the art will recognize that the informed sampling technique described herein may be implemented in various types of systems using various data transport protocols, and that the signatures will vary depending upon the particular implementation. For illustrative purposes, we will provide an example of how informed sampling may be used to bias sampled data in an IP network in order to implement an intrusion detection application. Suppose that a known network exploit exists whereby an attacker can gain access to a remote computer by sending a particular sequence of data packets to port 1468 of the remote computer. Also, assume that analysis of the exploit shows that a flow resulting in a successful attack generally has 35 packets in the flow with more than 35,657 bytes in the flow. Also assume that the attack is implemented using the TCP protocol, and that many such attacks have been originated from IP addresses in the range 123.456.xxx.xxx. Also, assume an implementation as shown in Fig. 6 in which informed sampling is used at both the router and the flow collector.

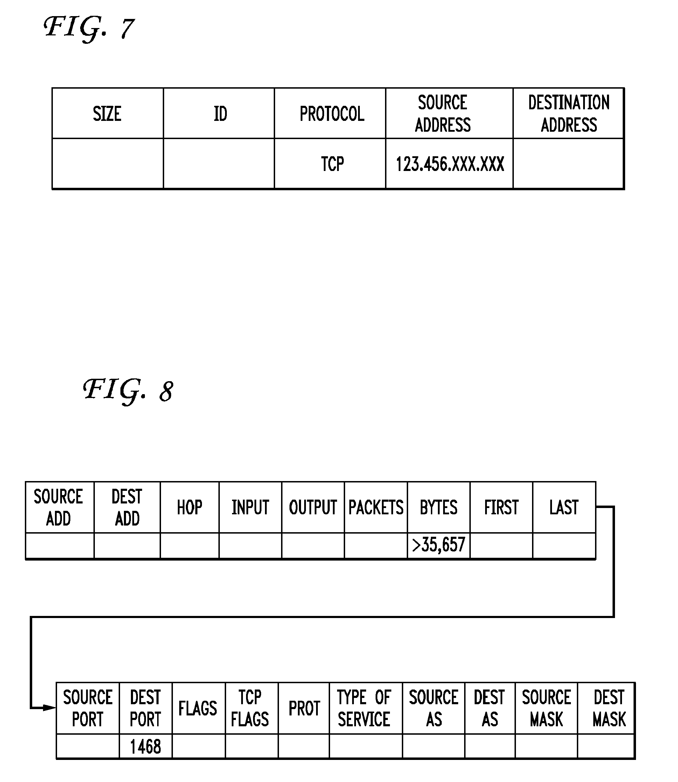

First, with respect to a signature to be used at the traffic monitor 604 of the router 602, we know that packets of interest will have a source address in the range 123.456.xxx.xxx and a protocol of TCP. Using a signature format matching the header format of Fig. 2, a possible signature for use at the router would be as shown in Fig. 7. A data packet will match the signature shown in Fig. 7 if it has a protocol of "TCP" and a source address in the range "123.456.xxx.xxx". The remaining fields are unspecified, and therefore will not be used during the comparison process to determine a match. Using the signature of Fig. 7 as signature 606 in the traffic monitor 604 will bias the sample set 610 toward containing data packets which are relevant to the particular intrusion detection application. The traffic monitor 604 will generate flow records (block 612) as described above using the biased sample set 610. The flow records will then be retrieved by the flow collector 620.

Next, with respect to a signature to be used at the flow collector 620, we know that flows of interest will have a destination port of 1468 and a byte count greater than 35,657. Using a signature format matching the flow record format of Fig. 3, a possible signature for use at the flow collector would be as shown in Fig. 8. A data packet will match the signature shown in Fig. 8 if it has a total byte count greater than 35,657 and a destination port of 1468. The remaining fields are unspecified, and therefore will not be used during the comparison process to determine a match. Using the signature of Fig. 8 as signature 622 in the flow collector 620 will bias the sample set 626 toward containing flow records which are relevant to the particular intrusion detection application. The flow records in sample set 626 will then be stored in the database 628 for evaluation by the particular intrusion detection application.

An implementation of informed sampling must take into account the processing capability and bandwidth constraints of the system it is running on. For example, if the incoming data matches the signature at a rate that is greater than the system can processes the data, then some of the data will be lost. However, in one implementation, it is possible that the system can process data at a very high rate, but only for a short period of time (e.g., 5 minutes). In such a case, it is possible to use the informed sampling of the present invention in order to generate a highly relevant sample set over a short period of time. Of course, one skilled in the art will recognize that there are many implementation specific tradeoffs that must be balanced with respect to data rate, sample size, signature choice, etc.

The particular signature(s) to be used is also highly application specific, and one skilled in the art of data networking will readily understand how to construct appropriate signatures for various applications. Further, signature construction may be automated, and various other systems and applications may generate the signatures to be used in the informed sampling.

One skilled in the art will recognize that the informed sampling techniques described herein may be performed on various data sets and in connection with various data processing applications. Further, when implemented in a data network, the informed sampling techniques may be implemented at various network and processing levels in order to bias the sample set as desired for a particular application.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope and spirit of the invention.

## Claims

1. A method for sampling network data comprising the steps of:
receiving network data at a first network node configured to sample data at a first sampling rate, said network data received at a rate greater than said first sampling rate;
said first network node choosing network data to be included in a first sample set based on at least one predetermined signature.

2. The method of claim 1 wherein said predetermined signature is chosen to bias said first sample set toward network data of interest for a particular application.

3. The method of claim 2 wherein said particular application is network intrusion detection.

4. The method of claim 1, 2 or 3 wherein said first network node is a flow collector and said received network data is network flow data received from a network router.

5. The method of any preceding claim wherein said first network node is a router and said received network data are data packets.

6. The method of any preceding claim further comprising the step of:
said first network node generating network flow data using data packets in said first sample set.

7. The method of any preceding claim further comprising the steps of:
receiving said network flow data at a second network node configured to sample data at a second sampling rate, said network flow data received at a rate greater than said second sampling rate;
said second network node choosing network flow data to be included in a second sample set based on at least one predetermined signature.

8. The method of claim 7 wherein said second network node is a flow collector.

9. A system comprising:
a first network node configured to sample data at a first sampling rate, said first network node comprising at least one interface for receiving network data at a rate greater than said first sampling rate;
said first network node further comprising a processor for comparing received network data to at least one stored signature, and for choosing network data to be included in a first sample set based on said comparison.

10. The system of claim 9 wherein said predetermined signature is chosen to bias said first sample set toward network data of interest for a particular application.

11. The system of claim 9 or 10 wherein said particular application is network intrusion detection.

12. The system of claim 9, 10, or 11 wherein said first network node is a flow collector and said received network data is network flow data received from a network router.

13. The system according to any one of claims 9 to 12 wherein said first network node is a router and said received network data are data packets.

14. The system according to any one of claims 9 to 13 further comprising:
a second network node configured to sample data at a second sampling rate, said second network node comprising at least one interface for receiving network flow data from said router at a rate greater than said second sampling rate;
said second network node further comprising a processor for comparing received network flow data to at least one predetermined signature and for choosing network flow data to be included in a second sample set based on said comparison.

15. The system of claim 14 wherein said second network node is a flow collector.
